# EUROPÄISCHE PATENTSCHRIFT

(11) **EP 2 610 500 B1**
(45) Veröffentlichungstag und Bekanntmachung des Hinweises auf die Patenterteilung: **16.09.2015**
(21) Anmeldenummer: 11195807.0
(22) Anmeldetag: 27.12.2011
(51) Int. Cl.: F04D 13/06, H02K 5/22

(54) **Pumpenaggregat**
Pump power unit
Groupe motopompe

(43) Veröffentlichungstag der Anmeldung: 03.07.2013
(73) Patentinhaber: Grundfos Holding A/S, 8850 Bjerringbro (DK)
(72) Erfinder: Moos, Allan, 8382 Hinnerup (DK)
(74) Vertreter: Patentanwälte Vollmann & Hemmer

(56) Entgegenhaltungen:
- DE-A1- 3 803 164
- DE-A1- 10 005 505
- DE-A1- 19 903 817

## Beschreibung

Die Erfindung betrifft ein Pumpenaggregat mit den im Oberbegriff des Anspruchs 1 angegebenen Merkmalen.

Es sind Pumpenaggregate bekannt, welche einen elektrischen Antriebsmotor aufweisen, welcher elektronisch gesteuert bzw. geregelt wird. Dazu ist an den elektrischen Antriebsmotor üblicherweise ein Klemmenkasten bzw. ein Elektronikgehäuse angeordnet, in welchem elektronische Bauteile zur Steuerung bzw. Regelung des elektrischen Antriebsmotors angeordnet sind. Dabei ist es bekannt, dass diese elektronischen Bauteile programmierbar sind, um ihnen bestimmte Funktionen zuzuweisen. So ist es möglich, dass dieselben elektronischen Bauteile für verschiedene Anwendungen oder Pumpenaggregate unterschiedlich programmiert werden. Dazu ist es bekannt, im Inneren des Elektronikgehäuses Kontakte vorzusehen, über welche eine solche Programmierung vorgenommen werden kann. Dabei muss diese Programmierung üblicherweise werkseitig vor der abschließenden Montage des Pumpenaggregates bzw. des Elektronikgehäuses erfolgen

DE 199 03 817 A1 offenbart eine Kühlwasserpumpe mit einer im Inneren eines Statorgehäuses angeordneten elektronischen Steuerschaltung. Die Steuerschaltung ist mit einem elektrischen Steckverbinder verbunden, welcher sich durch ein Loch im Gehäuse nach außen erstreckt. Dort kann dann ein geeigneter Anschlussstecker zur Energieversorgung der Pumpe angeschlossen werden. Eine Möglichkeit der Programmerung der elektronischen Steuerschaltung ist nicht vorgesehen. Im Hinblick auf diesen Stand der Technik ist es Aufgabe der Erfindung, ein Pumpenaggregat bereitzustellen, welches auch im fertig montierten Zustand noch eine Programmierung der elektronischen Bauteile zur Steuerung bzw. Regelung des Pumpenaggregates zulässt.

Diese Aufgabe wird durch ein Pumpenaggregat mit den in Anspruch 1 angegebenen Merkmalen gelöst. Bevorzugte Ausführungsformen ergeben sich aus den Unteransprüchen, der nachfolgenden Beschreibung sowie den beigefügten Figuren.

Das erfindungsgemäße Pumpenaggregat weist wie bekannte Pumpenaggregate einen elektrischen Antriebsmotor auf. Dieser elektrische Antriebsmotor kann im Inneren eines Statorgehäuses angeordnet sein, welches vorzugsweise direkt mit einem Pumpengehäuse verbunden ist, in welchem zumindest ein Laufrad der Pumpe angeordnet ist. Das Laufrad wird über eine Welle drehend von dem elektrischen Antriebsmotor angetrieben. Ein solches Pumpenaggregat kann beispielsweise ein Umwälzpumpenaggregat, insbesondere ein Heizungsumwälzpumpenaggregat sein, welche üblicherweise eine Baueinheit bestehend aus elektrischem Antriebsmotor und Pumpe bilden. Dabei kann der elektrische Antriebsmotor insbesondere nasslaufend, d. h. als Spaltrohrmotor ausgebildet sein.

Der elektrische Antriebsmotor weist einen Klemmenkasten bzw. ein Elektronikgehäuse auf, in dessen Inneren zumindest ein elektronisches Bauteil angeordnet ist, welches zur Steuerung bzw. Regelung des elektrischen Antriebsmotors dient. Ein solcher Klemmenkasten bzw. ein solches Elektronikgehäuse kann außen an ein Statorgehäuse des elektrischen Antriebsmotors angesetzt sein, insbesondere an die axiale Stirnseite angesetzt sein. Alternativ kann das Elektronikgehäuse auch ganz oder teilweise in das Statorgehäuse des Elektromotors integriert sein, d. h. insbesondere von einem Teil des Statorgehäuses des elektrischen Antriebsmotors selbst gebildet werden.

In dem Elektronikgehäuse ist darüber hinaus zumindest eine erste elektrische Leiterplatte angeordnet, auf welcher elektrische Kontakte ausgebildet sind, über die das zumindest eine elektronische Bauteil im Inneren des Elektronikgehäuses programmierbar ist. Beispielsweise kann über diese Kontakte eine Software zum Betrieb des elektronischen Bauteils in das elektronische Bauteil eingespielt und dort in einem Speicher abgelegt werden. Auch andere Anpassungen zur Programmierung können über diese Kontakte vorgenommen werden. So können dem elektrischen Bauteil verschieden Funktionen zum Betrieb bzw. zur Steuerung oder Regelung des elektrischen Antriebsmotors einprogrammiert werden. Insbesondere kann so ein universell einsetzbar elektronisches Bauteil durch unterschiedliche Programmierung an verschiedene Einsatzzwecke angepasst werden. So kann beispielsweise ein und dasselbe Pumpenaggregat für verschiedene Anwendungen allein durch unterschiedliche Einstellung der Steuer- bzw. Regelelektronik anders angepasst werden. Alternativ ist es auch denkbar, dieselbe Elektronik für verschieden Antriebsmotoren oder Pumpen einzusetzen und in diesem Zusammenhang unterschiedliche Programmierung des elektronischen Bauteils vorzunehmen.

Dabei dienen die elektronischen Kontakte vorzugsweise ausschließlich zur grundlegenden, insbesondere werkseitigen Programmierung des zumindest einen elektrischen Bauteils und weisen darüber hinaus bevorzugt keine weiteren Kommunikationsfunktionen auf. D. h. die Kontakte dienen nicht dazu, um im Betrieb des Pumpenaggregates mit weiteren elektronischen Steuergeräten oder Fernsteuergeräten zu kommunizieren. D. h. über die Kontakte sollen vorzugsweise im laufenden Betrieb keine Einstellungen mehr vorgenommen werden.

Erfindungsgemäß ist in einer Wandung des Elektronikgehäuses zumindest eine Öffnung ausgebildet, durch welche die elektrischen Kontakte auf der Leiterplatte von außen kontaktierbar sind. Dies ermöglicht es, das zumindest eine elektrische Bauteil auch im fertig montierten Zustand des Pumpenaggregates und des Elektronikgehäuses von außen zu programmieren. Dadurch wird die Fertigung und Montage vereinfacht, da zunächst das Pumpenaggregat vollständig montiert werden kann und die Programmierung des elektronischen Bauteils gegen Ende der Produktion bzw. Montage erfolgen kann. D. h. es wird möglich, die genaue Funktion der Steuer- bzw. Regelelektronik durch Programmierung erst gegen Ende des Fertigungsprozesses festzulegen. Auch wird es möglich, fertig montierte Pumpenaggregate zu lagern und erst vor der Auslieferung in Abhängigkeit der gewünschten Anforderungen die Elektronik bzw. das zumindest eine elektronische Bauteil von außen zu programmieren. Durch die zumindest eine Öffnung können Kontaktstifte in das Innere des Elektronikgehäuses eingeführt werden und dort die Kontakte auf der Leiterplatte zu deren Programmierung kontaktieren.

Dadurch, dass die Kontakte auf der Leiterplatte im Inneren des Elektronikgehöuses durch zumindest eine Öffnung in der Gehäusewandung direkt kontaktiert werden können, kann auf die Anordnung eines speziellen Steckkontaktes an der Außenseite verzichtet werden. Dies vereinfacht zum einen den Aufbau des Pumpenaggregates, darüber hinaus können die Kontakte zur Programmierung geschützt im Inneren des Elektronikgehäuses angeordnet werden, so dass sie vor versehentlicher Kontaktierung geschützt sind.

Die Wandung des Elektronikgehäuses, in welcher die zumindest eine Öffnung ausgebildet ist, ist vorzugsweise eine dem elektrischen Antriebsmotor abgewandte Aussenwandung, insbesondere eine dem elektrischen Antriebsmotor entgegengesetzte Aussenwandung. Eine solche Aussenwandung ist auch nach der Montage des Elektronikgehäuses an dem Antriebsmotor gut zugänglich, wobei auch die zumindest eine Öffnung gut zugänglich ist und leicht von außen Kontaktstifte bzw. Kontaktelemente zum Kontaktieren der Kontakte auf der Leiterplatte und zur Programmierung des elektronischen Bauteils in das Innere des Elektronikgehäuses eingeführt werden können.

Weiter bevorzugt ist die Wandung des Elektronikgehäuses, in welcher die zumindest eine Öffnung ausgebildet ist, eine Wandung, an welcher Anzeige- und oder Bedienelemente angeordnet sind. Besonders bevorzugt sind an dieser Wandung sämtliche Anzeige- und oder Bedienelemente des Pumpenaggregates angeordnet. Auf diese Weise werden alle Anzeige- und Bedienelemente und die zumindest eine Öffnung zur Programmierung an einer Wandung des Elektronikgehäuses gebündelt, welche leicht von außen zugänglich ist.

Gemäß einer weiteren bevorzugten Ausführungsform ist im Inneren des Elektronikgehäuses unterhalb der Wandung zumindest eine zweite Leiterplatte angeordnet, welche zumindest in einem Bereich, der unterhalb der zumindest einen Öffnung in der Wandung gelegen ist, eine Aussparung aufweist. Diese zweite Leiterplatte kann insbesondere dazu vorgesehen sein, Bedien- und oder Anzeigeelemente, die an der Wandung des Elektronikgehäuses angeordnet sind, zu kontaktieren bzw. zu tragen. D. h. diese Leiterplatte ist vorzugsweise direkt unterhalb der Wandung angeordnet oder ggf. auch in die Wandung integriert. Die erste Leiterplatte, welche die Kontakte zur Programmierung des zumindest einen elektronischen Bauteils trägt, liegt von der Wandung des Elektronikgehäuses gesehen weiter beabstandet, d. h. unterhalb der zweiten Leiterplatte. Um dennoch die Kontakte auf der ersten Leiterplatte durch die Öffnung in der Wandung kontaktieren zu können, ist die zweite Leiterplatte im Bereich der Öffnungen ausgespart, so dass die Projektion bzw. Flucht zwischen der zumindest einen Öffnung und den Kontakten auf der ersten Leiterplatte zur Programmierung des zumindest einen elektronischen Bauteils nicht versperrt ist. D. h. Kontaktelemente oder Kontaktstifte, welche zur Kontaktierung der Kontakte auf der ersten Leiterplatte zur Programmierung des elektronischen Bauteils durch die zumindest eine Öffnung der Wandung in das Elektronikgehäuse eingeführt werden, passieren die zweite Leiterplatte im Bereich deren Aussparung.

Besonders bevorzugt ist das Elektronikgehäuse an das axiale Stirnende eines Statorgehäuses des elektronischen Antriebsmotors angesetzt. Die Wandung des Elektronikgehäuses, in welcher die zumindest eine Öffnung ausgebildet ist, ist ferner vorzugsweise eine axiale Stirnwand des Elektronikgehäuses. Insofern ist die Wandung, in welcher die zumindest eine Öffnung ausgebildet ist und an welcher vorzugsweise Bedien- und oder Anzeigelemente gelegen sind, eine axiale Stirnseite des gesamten Pumpenaggregates, welche von außen auch im eingebauten Zustand des Pumpenaggregates gut zugänglich ist. Dies ist insbesondere dann von Vorteil, wenn die Programmierung nicht werkseitig vorgenommen werden soll, sondern vor Ort im eingebauten Zustand des Pumpenaggregates, beispielsweise, wenn das Pumpenaggregat bereits in einer Heizungsanlage eingebaut ist. Dann ist es möglich, dass ein Monteur grundlegende Programmierungen des elektronischen Bauteils vornimmt, beispielsweise um das Pumpenaggregat an die Heizungsanlage anzupassen. Dabei ist jedoch vorgesehen, dass dann später im laufenden Betrieb über die Kontakte auf der ersten Leiterplatte keine weiteren Informationen zur Einstellung der Regelung- bzw. Steuerung des elektrischen Antriebsmotors übertragen werden.

Besonders bevorzugt sind in der Wandung mehrere Öffnungen ausgebildet, wobei vorzugsweise durch jede der Öffnungen jeweils ein elektrischer Kontakt von außen kontaktierbar ist. D. h. es liegt vorzugsweise jeweils eine Öffnung einem Kontakt auf der Leiterplatte gegenüber. Dies hat den Vorteil, dass die Öffnungen selber relativ klein ausgebildet werden können, nämlich so klein, dass gerade ein Kontaktelement bzw. Kontaktstift durch die Öffnung hindurchführbar ist, um den Kontakt zu kontaktieren. Die Öffnung kann dabei gleichzeitig der Führung des Kontaktelementes bzw. Kontaktstiftes dienen.

Gemäß einer weiteren bevorzugten Ausführungsform der Erfindung ist ein Verschlusselement vorhanden, mit welchem die zumindest eine

Öffnung verschließbar ist. Das Verschlusselement kann zum dauerhaften Verschluss der zumindest einen Öffnung ausgebildet sein. Das Verschlusselement dient dazu, die Öffnung nach der Programmierung zu verschließen, insbesondere dicht zu verschließen, so dass keine Feuchtigkeit durch die Öffnung von außen in das Elektronikgehäuse eindringen kann.

Gemäß einer speziellen Ausführungsform kann das Verschlusselement von der Wandung lösbar sein, d. h. nicht zum dauerhaften Verschluss der Öffnung ausgebildet sein. Dies ermöglicht es, die Öffnung auch nach der Programmierung noch einmal zu öffnen, um beispielsweise eine Umprogrammierung vorzunehmen oder ein Softwareupdate auf das elektronische Bauteil übertragen zu können.

Das Verschlusselement kann beispielsweise zum Verkleben mit der Wandung ausgebildet sein oder mit der Wandung verklebt sein. Durch Verkleben kann ein dichter Verschluss der Öffnung mit dem Verschlusselement erreicht werden. Je nach Art des verwendeten Klebstoffes ist darüber hinaus eine dauerhafte oder lösbare Verklebung möglich.

Besonders bevorzugt wird das Verschlusselement von einer die Wandung an deren Außenseite überdeckenden Deckfolie gebildet. Diese Deckfolie bildet den äußeren Abschluss der Aussenwandung und kann so gleichzeitig die zumindest eine Öffnung in der Wandung verschließen. Die Deckfolie kann darüber hinaus insbesondere eine gewünschte ästhetische Gestaltung der Außenseite der Wandung bewirken. So kann die Deckfolie insbesondere auch eine Beschriftung tragen. So können auf der Deckfolie beispielsweise Herstellerangaben sowie Bedienhinweise angebracht bzw. aufgedruckt sein. Insbesondere kann die Deckfolie eine Symbolik oder Beschriftung für Anzeige- und oder Bedienelemente tragen, welche an der Wandung angeordnet sind. Dabei überdeckt die Deckfolie besonders bevorzugt auch Bedien- und oder Anzeigeelemente, welche an der Wandung vorgesehen sind. Dabei kann die Deckfolie im Bereich der Bedienelemente elastisch verformbar ausgebildet sein, so dass Bedienelemente wie Druckschalter oder Drucktaster von außen durch Verformung der Deckfolie betätigt werden können. Insbesondere im Bereich der Anzeigelemente kann die Deckfolie transparent oder zumindest teiltransparent ausgebildet sein, so dass Anzeigeelemente, wie beispielsweise Leuchtdioden, welche an der Wandung unterhalb der Deckfolie angeordnet sind, durch die Deckfolie hindurch scheinen können. Beispielsweise könnte auch ein Display unterhalb der Deckfolie angeordnet sein und die Deckfolie zumindest im Bereich oberhalb des Displays transparent ausgebildet sein. Die Deckfolie überdeckt dabei vorzugsweise sämtliche Öffnungen in der Wandung, insbesondere auch die Öffnungen für die Bedien- und oder Anzeigeelemente und die zumindest eine Öffnung zur Programmierung. So werden sämtliche Öffnungen durch die Deckfolie dicht verschlossen und die Deckfolie verhindert ein Eindringen von Feuchtigkeit in das Innere des Elektronikgehäuses.

In dem Elektronikgehäuse ist besonders bevorzugt zumindest ein Teil eines Frequenzumrichters zur Steuerung bzw. Regelung elektrischen Antriebsmotors angeordnet. Das elektronische Bauteil, welches von außen in der vorangehend beschriebenen Weise programmierbar ist, stellt dabei bevorzugt ein Bauteil dar, welches Teil des Frequenzumrichters ist oder mit diesem zusammenwirkt.

Nachfolgend wir die Erfindung beispielhaft anhand der beigefügten
Figuren beschrieben. In diesen zeigt:
   Figur 1 eine teilweise geschnittene axiale Draufsicht auf ein erfindungsgemäßes Pumpenaggregat und
   Figur 2 eine teilweise geschnittene Seitenansicht des Statorgehäuses des Pumpenaggregates gemäß Figur 1.

Das Pumpenaggregat weist in bekannter Weise ein Pumpengehäuse 2 mit einem Saugstutzen 4 und einem Druckstutzen 6 sowie einem im Inneren des Pumpengehäuses angeordneten Laufrad (hier nicht gezeigt) auf. Axialseitig, d. h. in Richtung der Dreh- bzw. der Längsachse X ist an das Pumpengehäuse 2 ein Motor- bzw. Statorgehäuse 8 angesetzt, in welchem sich ein elektrischer Antriebsmotor zum Antrieb des Laufrades im Inneren des Pumpengehäuses 2 befindet. In dieser Hinsicht entspricht das gezeigte Pumpenaggregat herkömmlichen Heizungsumwälzpumpenaggregaten. Insbesondere kann der hier nicht näher beschrieben elektrische Antriebsmotor als nasslaufender elektrischer Antriebsmotor mit einem Spaltrohr ausgebildet sein.

Im Bereich des dem Pumpengehäuse 2 abgewandten Axialendes bildet-das Statorgehäuse 8 in seinem Inneren ein Elektronikgehäuse 10, welches am Axialende des Statorgehäuses 8 durch einen Deckel 12 verschlossen ist. Im Inneren des Elektronikgehäuses 10 ist eine erste Leiterplatte 14 angeordnet, welche elektronische Bauteile 16 zur Steuerung bzw. Regelung des elektrischen Antriebsmotors des Pumpenaggregates trägt. Neben z. B. Bauteilen eines Frequenzumrichters trägt die Leiterplatte 14 elektronische Bauteile, welche programmierbar sind, um bestimmte Regel- oder Steuerfunktionen des Pumpenaggregates programmgesteuert auszuführen. Um diese elektronischen Bauteile 16 programmieren zu können, sind an der dem Axialende des Statorgehäuses 8, welches durch einen Deckel 12 geschlossen ist, zugewandten Seite der Leiterplatte 14 Kontakte 18 angeordnet. Diese elektrischen Kontakte 18 können von einem Steuer- bzw. Programmiergerät über entsprechende Kontaktelemente kontaktiert werden, um die Programmierung der elektronischen Bauteile 16 auf der Leiterplatte 14 von außen vornehmen zu können, beispielsweise eine Software oder Firmware in die elektronischen Bauteile von außen einspielen zu können.

Die erste elektrische Leiterplatte 14 erstreckt sich parallel zu der stirnseitigen Wandung 20 des Deckels 12, d. h. normal zur Längs- bzw. Drehachse X. Um die Kontakte 18 auch im geschlossenen Zustand des Elektronikgehäuses 10 von außen kontaktieren zu können, sind in der stirnseitigen Wandung des Deckels 12 Öffnungen 22 in Form von Durchgangslöchern ausgebildet. Die Öffnungen 22 liegen den Kontakten 18 gegenüber, wobei jeweils eine Öffnung 22 genau einem Kontakt 18 gegenüberliegt. Es wäre jedoch auch denkbar, die Öffnungen größer auszubilden, so dass eine Öffnung 22 mehreren Kontakten 18 gegenüberliegt. Bei der hier gezeigten Ausgestaltung ist es möglich, durch jede der Öffnungen 22 einen Kontaktstift hindurchzuführen und den gegenüberliegenden Kontakt 18 von außen zu kontaktieren und dann über die Kontakte 18 elektrische Signale zu den elektronischen Bauteilen 16 zu deren Programmierung zu übertragen. Die Öffnungen 22 können dabei gleichzeitig zur Führung der Kontaktstifte dienen.

Die Programmierung, welche auf diese Weise vorgenommen werden soll, ist eine grundlegende Programmierung, insbesondere eine werkseitige Programmierung, welche die elektronischen Bauteile zur Steuerung bzw. Regelung des Pumpenaggregates einmalig an den gewünschten Anwendungsfall anpasst, beispielsweise die elektronischen Bauteile in Abhängigkeit des Einsatzzweckes des Pumpenaggregates programmiert. Die Kontakte 18 sind nicht dafür vorgesehen, im laufenden Betrieb des Pumpenaggregates Steuer- oder Regelsignale zur Anpassung der Steuerung bzw. Regelung des Pumpenaggregates zu übertragen bzw. zu empfangen.

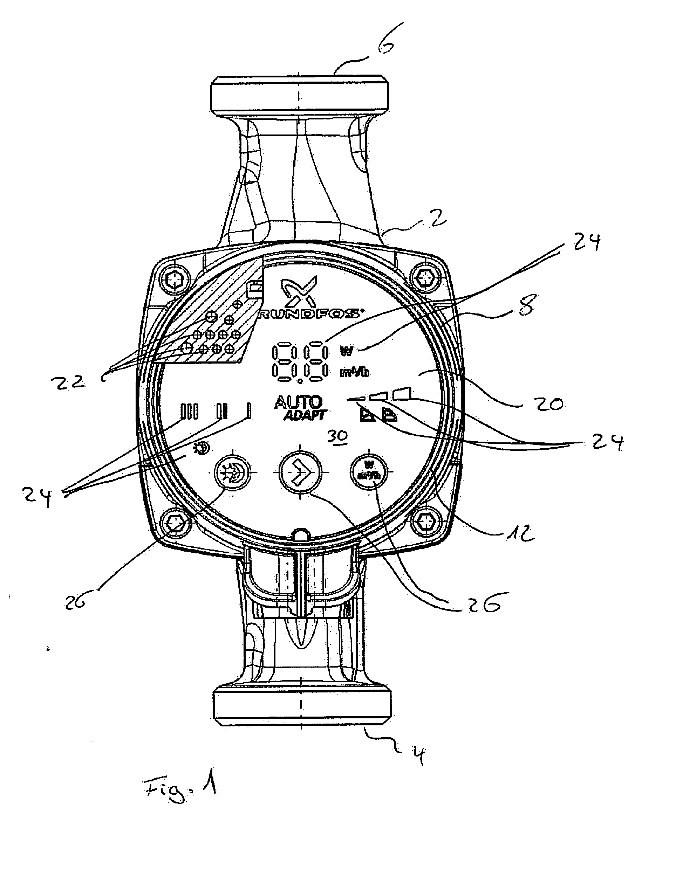

Wie in Figur 1 gezeigt, sind an der Wandung 20 des Deckels 12 Anzeigeelemente 24 und Bedienelemente 26 angeordnet. Bei dieser Ausführungsform sind die Anzeigelemente 24 als Leuchtdioden und die Bedienelemente als Drucktasten 26 ausgebildet. Die elektronischen bzw. elektrischen Bauteile der Bedien- oder Anzeigeelemente sind auf einer zweiten Leiterplatte 28 angeordnet, welche im Inneren des Elektronikgehäuses 10 direkt unterhalb der Wandung 20 bzw. direkt angrenzend an die Wandung 20 gelegen ist. Die Leiterplatte 28 erstreckt sich parallel zu der Leiterplatte 14 und der Wandung 20, d. h. im Wesentlichen normal zur Längsachse X. An den Stellen, wo die Bedienelemente 26 bzw. Anzeigeelemente 24 an der Leiterplatte 28 gelegen sind, sind in der Wandung 20 Öffnungen ausgebildet, so dass die Anzeigelemente von außen sichtbar und die Bedienelemente 26 von außen betätigbar sind. Die Wandung 20 ist an ihrer Außenseite von einer Deckfolie 30 überdeckt, welche die gesamte Stirnfläche des Deckels 12 d. h. im Wesentlichen die gesamte Wandung 20 an ihrer Außenseite überdeckt. Die Deckfolie 30 trägt die Beschriftungen und Symbole für die Bedien- und Anzeigeelemente und ist im Bereich der Anzeigeelemente 24 transparent bzw. teiltransparent ausgebildet. Im Bereich der Betätigungselemente 26 ist die Folie elastisch verformbar, so dass unter Verformung der Deckfolie 20 bei Druck auf die Betätigungselemente 26 unterhalb der Folie 20 gelegenen Drucktasten betätigt werden können.

Die Deckfolie 30 überdeckt auch die Öffnungen 22 und verschließt diese. Die Deckfolie 30 ist flächig auf die Wandung 20 aufgeklebt, so dass sämtliche Öffnungen in der Wandung 20, insbesondere auch die Öffnungen 22 dicht verschlossen werden.

In der Fertigung des Pumpenaggregates ist es somit möglich, das gesamte Pumpenaggregat vollständig zu montieren bis auf die Deckfolie 30. Durch Einsetzen von Kontaktstiften in die Öffnungen 22 können die unter den Öffnungen 22 gelegenen elektrischen Kontakte 18 zur Programmierung der elektronischen Bauteile 16 kontaktiert werden. Nach der erfolgten Programmierung kann dann die Deckfolie 30 auf die Wandung 20 aufgeklebt werden, wobei dann das Elektronikgehäuse 10 und die Öffnungen 22 abschließend verschlossen sind.

Gegebenenfalls kann die Deckfolie 30 lösbar ausgebildet sein, so dass z. B. die Klebeverbindung zwischen der Deckfolie 30 und der Wandung 20 wieder gelöst werden kann, insbesondere die Deckfolie 30 abgezogen werden kann, um die Öffnungen 22 wieder frei zu geben, beispielsweise um eine Neuprogrammierung oder ein Softwareupdate durch Kontaktierung der elektrischen Kontakte 18 durchführen zu können. Anschließend kann die Deckfolie 30 oder eine neue Deckfolie 30 zum Verschließen der Öffnungen 22 wieder auf die Wandung 20 aufgeklebt werden.

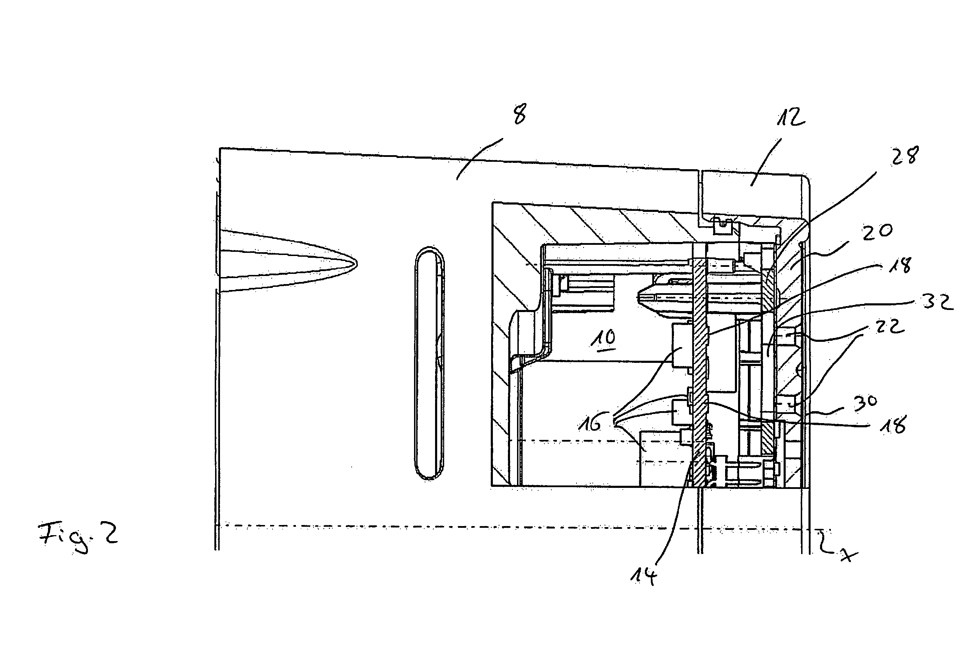

In Figur 2 ist zu erkennen, dass die zweite Leiterplatte 28 in dem Bereich unterhalb der Öffnungen 22 eine Aussparung 32 aufweist. Diese ermöglicht es, dass sich in die Öffnungen 22 eingesetzte Kontaktstifte durch die Aussparung 32 in der zweiten Leiterplatte 28 hindurch erstrecken können, um die Kontakte 18 auf der ersten Leiterplatte 14, welche unterhalb der zweiten Leiterplatte 28 gelegen ist, zu kontaktieren.

### Bezugszeichenliste

- 2: - Pumpengehäuse
- 4: - Saugstuzen
- 6: - Druckstuzen
- 8: - Statorgehäuse
- 10: - Elektronikgehäuse
- 12: - Deckel
- 14: - Leiterplatte
- 16: - elektronische Bauteile
- 18: - elektrische Kontakte
- 20: - Wandung
- 22: - Öffnungen
- 24: - Anzeigelemente
- 26: - Bedienelemente
- 28: - zweite Leiterplatte
- 30: - Deckfolie
- 32: - Aussparung
- X: - Längs- bzw. Drehachse

## Patentansprüche

1. Pumpenaggregat mit einem elektrischen Antriebsmotor und einem Elektronikgehäuse (10), in dessen Inneren zumindest eine erste elektrische Leiterplatte (14) angeordnet ist, auf welcher elektrische Kontakte (18) ausgebildet sind, **dadurch gekennzeichnet, dass** über die elektrischen Kontakte (18) zumindest ein elektronisches Bauteil (16) im Inneren des Elektronikgehäuses (10) programmierbar ist und in einer Wandung (20) des Elektronikgehäuses (10) zumindest eine Öffnung (22) ausgebildet ist, durch welche die elektrischen Kontakte (18) auf der Leiterplatte (14) von außen kontaktierbar sind.

2. Pumpenaggregat nach Anspruch 1, **dadurch gekennzeichnet, dass** die Wandung (20) des Elektronikgehäuses (10), in welcher die zumindest eine Öffnung (22) ausgebildet ist, eine dem elektrischen Antriebsmotor abgewandte Aussenwandung ist.

3. Pumpenaggregat nach Anspruch 1 oder 2, **dadurch gekennzeichnet, dass** an der Wandung (20) des Elektronikgehäuses (10), in welcher die zumindest eine Öffnung (22) ausgebildet ist, Anzeige-(24) und/oder Bedienelemente (26) angeordnet sind.

4. Pumpenaggregat nach einem der vorangehenden Ansprüche, **dadurch gekennzeichnet, dass** im Inneren des Elektronikgehäuses (10) unterhalb der Wandung (20) zumindest eine zweite Leiterplatte (28) angeordnet ist, welche zumindest in einem Bereich, der unterhalb der zumindest einen Öffnung (22) in der Wandung (20) gelegen ist, eine Aussparung (32) aufweist.

5. Pumpenaggregat nach einem der vorangehenden Ansprüche, **dadurch gekennzeichnet, dass** das Elektronikgehäuses (10) an ein axiales Stirnende eines Statorgehäuses (8) des elektrischen Antriebsmotors angesetzt ist.

6. Pumpenaggregat nach einem der vorangehenden Ansprüche, **dadurch gekennzeichnet, dass** die Wandung (20) des Elektronikgehäuses, in welcher die zumindest eine Öffnung (22) ausgebildet ist, eine axiale Stirnwandung des Elektronikgehäuses (10) ist.

7. Pumpenaggregat nach einem der vorangehenden Ansprüche, **dadurch gekennzeichnet, dass** in der Wandung (20) mehrere Öffnungen (22) ausgebildet sind, wobei vorzugsweise durch jede der Öffnungen (22) jeweils ein elektrischer Kontakt (18) auf der Leiterplatte (14) von außen kontaktierbar ist.

8. Pumpenaggregat nach einem der vorangehenden Ansprüche, **dadurch gekennzeichnet, dass** ein Verschlusselement (30) vorhanden ist, mit welchem die zumindest eine Öffnung (22) verschließbar ist.

9. Pumpenaggregat nach Anspruch 8, **dadurch gekennzeichnet, dass** das Verschlusselement (30) von der Wandung (20) lösbar ist.

10. Pumpenaggregat nach Anspruch 8, **dadurch gekennzeichnet, dass** das Verschlusselement (30) zum Verkleben mit der Wandung (20) ausgebildet ist oder mit der Wandung (20) verklebt ist.

11. Pumpenaggregat nach einem der Ansprüche 8 bis 10, **dadurch gekennzeichnet, dass** das Verschlusselement (30) von einer die Wandung (20) an deren Außenseite überdeckenden Deckfolie (30) gebildet wird.

12. Pumpenaggregat nach Anspruch 11, **dadurch gekennzeichnet, dass** die Deckfolie (30) eine Beschriftung trägt.

13. Pumpenaggregat nach Anspruch 11 oder 12, **dadurch gekennzeichnet, dass** die Deckfolie (30) Bedien-(26) und/oder Anzeigeelemente (24) überdeckt.

14. Pumpenaggregat nach einem der vorangehenden Ansprüche, **dadurch gekennzeichnet, dass** in dem Elektronikgehäuse (10) zumindest ein Teil eines Frequenzumrichters zur Steuerung des elektrischen Antriebsmotors angeordnet ist.

15. Pumpenaggregat nach einem der vorangehenden Ansprüche, **dadurch gekennzeichnet, dass** die elektrischen Kontakte (18) ausschließlich zur grundlegenden, insbesondere werksseitigen Programmierung des elektronischen Bauteils (16) vorgesehen sind und vorzugsweise keine weitere Kommunikationsfunktion aufweisen.

16. Pumpenaggregat nach einem der vorangehenden Ansprüche, **dadurch gekennzeichnet, dass** das Pumpenaggregat als Umwälzpumpenaggregat, insbesondere mit einem nasslaufenden elektrischen Antriebsmotor ausgebildet ist.

## Claims

1. A pump assembly with an electric drive motor and with an electronics housing (10), in whose inside at least one first electrical circuit board (14) is arranged, on which circuit board electrical contacts (18) are formed, **characterised in that** via the electrical contacts (18) at least one electronic component (16) in the inside of the electronics housing (10) may be programmed and at least one opening (22), through which the electrical contacts (18) on the circuit board (14) are contactable from the outside, is formed in a wall (20) of the electronics housing (10).

2. A pump assembly according to claim 1, **characterised in that** the wall (20) of the electronics housing (10), in which the at least one opening (22) is formed, is an outer wall which is away from the electrical drive motor.

3. A pump assembly according to claim 1 or 2, **characterised in that** display elements (24) and/or operating elements (26) are arranged on the wall (20) of the electronics housing (10), in which the at least one opening (22) is formed.

4. A pump assembly according to one of the preceding claims, **characterised in that** at least one second circuit board (28) is arranged in the inside of the electronics housing (10) below the wall (20), said at least one second circuit board comprising a recess (32) at least in a region which is situated below the at least one opening (22) in the wall (20).

5. A pump assembly according to one of the preceding claims, **characterised in that** the electronics housing (10) is applied onto an axial face-end of a stator housing (8) of the electrical drive motor.

6. A pump assembly according to one of the preceding claims, **characterised in that** the wall (20) of the electronics housing, in which the at least one opening (22) is formed, is an axial end-wall of the electronics housing (10).

7. A pump assembly according to one of the preceding claims, **characterised in that** several openings (22) are formed in the wall (20), wherein preferably in each case an electrical contact (18) on the circuit board (14) is contactable from the outside, preferably through each of the openings (22).

8. A pump assembly according to one of the preceding claims, **characterised in that** a closure element (30) is present, with which the at least one opening (22) may be closed.

9. A pump assembly according to claim 8, **characterised in that** the closure element (30) is releasable from the wall (20).

10. A pump assembly according to claim 8, **characterised in that** the closure element (30) is designed for bonding to the wall (20) or is bonded to the wall (20).

11. A pump assembly according to one of the claims 8 to 10, **characterised in that** the closure element (30) is formed by a cover film (30) covering the wall (20) on its outer side.

12. A pump assembly according to claim 11, **characterised in that** the cover film (30) carries an inscription.

13. A pump assembly according to claim 11 or 12, **characterised in that** the cover film (30) covers operating elements (26) and/or display elements (24).

14. A pump assembly according to one of the preceding claims, **characterised in that** at least a part of a frequency converter for controlling the electrical drive motor is arranged in the electronics housing (10).

15. A pump assembly according to one of the preceding claims, **characterised in that** the electrical contacts (18) are provided exclusively for the basic programming, in particular on the part of the factory, of the electronic component (16) and preferably have no further communication function.

16. A pump assembly according to one of the preceding claims, **characterised in that** the pump assembly is designed as a circulation pump assembly, in particular with a wet-running electric drive motor.

## Revendications

1. Groupe motopompe avec un moteur d'entraînement électrique et un boîtier électronique (10) à l'intérieur duquel est disposé au moins un premier circuit imprimé (14) sur lequel sont formés des contacts électriques (18), **caractérisé en ce qu'**au moins un composant électronique (16) est programmable à l'intérieur du boîtier électronique (10) via les contacts électriques (18) et que dans une paroi (20) du boîtier électronique (10) est formée au moins une ouverture (22) à travers laquelle les contacts électriques (18) sur le circuit imprimé (14) peuvent être contactés de l'extérieur.

2. Groupe motopompe selon la revendication 1, **caractérisé en ce que** la paroi (20) du boîtier électronique (10) dans laquelle est formée au moins une ouverture (22) est une paroi extérieure opposée au moteur d'entraînement électrique.

3. Groupe motopompe selon la revendication 1 ou 2, **caractérisé en ce que** sur la paroi (20) du boîtier électronique (10) dans laquelle est formée au moins une ouverture (22), sont disposés des éléments d'affichage (24) et/ou des éléments de commande (26).

4. Groupe motopompe selon l'une des revendications précédentes, **caractérisé en ce que**, à l'intérieur du boîtier électronique (10), en dessous de la paroi (20), est disposé au moins un deuxième circuit imprimé (28) qui comporte, dans une zone située en dessous de la au moins une ouverture (22) dans la paroi (20), un évidement (32).

5. Groupe motopompe selon l'une des revendications précédentes, **caractérisé en ce que** le boîtier électronique (10) est adjacent à une extrémité frontale axiale d'un carter de stator (8) du moteur d'entraînement électrique.

6. Groupe motopompe selon l'une des revendications précédentes, **caractérisé en ce que** la paroi (20) du boîtier électronique dans laquelle est formée au moins une ouverture (22), est une paroi frontale axiale du boîtier électronique (10).

7. Groupe motopompe selon l'une des revendications précédentes, **caractérisé en ce que** plusieurs ouvertures (22) sont formées dans la paroi (20), de préférence à travers chacune des ouvertures, un contact électrique (18) respectif sur le circuit imprimé (18) pouvant être contacté de l'extérieur.

8. Groupe motopompe selon l'une des revendications précédentes, **caractérisé en ce qu'**il y a un élément obturateur (30) à l'aide duquel la au moins une ouverture (22) peut être obturée.

9. Groupe motopompe selon la revendication 8, **caractérisé en ce que** l'élément obturateur (30) est séparable de la paroi (20).

10. Groupe motopompe selon la revendication 8, **caractérisé en ce que** l'élément obturateur (30) est formé pour être collé sur la paroi (20) ou est collé sur la paroi (20).

11. Groupe motopompe selon l'une des revendications 8 à 10, **caractérisé en ce que** l'élément obturateur (30) est formé par un film de couverture (30) recouvrant la paroi (20) sur la face extérieure de celle-ci.

12. Groupe motopompe selon la revendication 11, **caractérisé en ce que** le film de couverture (30) porte une inscription.

13. Groupe motopompe selon la revendication 11 ou 12, **caractérisé en ce que** le film de couverture (30) recouvre des éléments de commande (26) et/ou d'affichage (24).

14. Groupe motopompe selon l'une des revendications précédentes, **caractérisé en ce que** dans le boîtier électronique (10) est disposée au moins une partie d'un convertisseur de fréquence pour la commande du moteur d'entraînement électrique.

15. Groupe motopompe selon l'une des revendications précédentes, **caractérisé en ce que** les contacts électriques (18) sont prévus exclusivement pour une programmation de base, notamment à l'usine, du composant électronique (16) et ne comporte, de préférence, pas de fonction de communication supplémentaire.

16. Groupe motopompe selon l'une des revendications précédentes, **caractérisé en ce que** le groupe motopompe est agencé comme groupe motopompe de recirculation, notamment avec un moteur d'entraînement électrique submersible.
